# EUROPEAN PATENT APPLICATION

(11) **EP 4 582 885 A1**
(43) Date of publication of application: **09.07.2025**
(21) Application number: 24181056.3
(22) Date of filing: 10.06.2024
(51) Int. Cl.: G05B 13/02, F24F 11/00, G05B 15/02

(54) **ADVANCED ENERGY OPTIMIZATION SYSTEM AND METHOD FOR PHARMACEUTICAL HVAC APPLICATIONS**

(30) Priority: 05.01.2024 IN 202441001059
(71) Applicant: Bert Labs Private Limited, Bengaluru 560076 (IN)
(72) Inventor: KOCHAR, Rohit, 560076 Bengaluru (IN)
(74) Representative: Botti & Ferrari S.p.A.

(57) **Abstract**

A system (100) for optimizing energy consumption by a pharma Heating, Ventilation, and Air Conditioning (HVAC) is disclosed. The system (100) includes a digital twin (112) of an HVAC (114) including at least one or more air handling units (AHUs) (114a). The digital twin (112) is based on design parameters and operational data. The system (100) further includes an RL agent (202) that is configured to receive training and learn control strategies through interaction with at least environment models (112c) for generating policies. The RL agent (202) is further configured to output at least one policy including an optimal speed of one or more fans, which when implemented leads to savings in the energy consumption while maintaining at least required temperature, relative humidity, air changes per hour (ACPH), and pressure difference in a pharma room of a pharma plant.

## Description

### CROSS-REFERENCE TO RELATED APPLICATIONS

The present application claims priority to Indian Patent Application No. 202441001059, filed to the Indian Patent Office on January 05, 2024, and entitled "ADVANCED ENERGY OPTIMIZATION SYSTEM AND METHOD FOR PHARMACEUTICAL HVAC APPLICATIONS", which is incorporated herein by reference in its entirety.

### FIELD OF THE INVENTION

The present invention pertains to the field of Heating, Ventilation, and Air Conditioning (HVAC) systems, specifically tailored for the pharmaceutical industry. More specifically, the present invention focuses on the integration of advanced control systems, energy-efficient technologies, and innovative strategies to optimize energy consumption in HVAC systems used in pharmaceutical facilities.

### BACKGROUND OF THE INVENTION

In the pharmaceutical industry, HVAC systems are crucial for maintaining controlled environments that are essential for product quality, safety, and compliance with regulatory standards. These systems are typically energy-intensive, accounting for a significant portion of the total energy consumption in pharmaceutical facilities. The rising energy costs and growing environmental concerns have driven the need for more energy-efficient HVAC solutions.

Traditionally, the pharmaceutical HVAC systems have operated on fixed schedules and set points, leading to inefficiencies and excessive energy use. The lack of intelligent controls and real-time adjustments based on varying factors such as occupancy, external weather conditions, and specific pharmaceutical process requirements further contribute to energy wastage.

Furthermore, many existing pharmaceutical facilities rely on outdated HVAC equipment that is not optimized for energy efficiency. This, combined with poor maintenance practices, results in suboptimal system performance and higher operational costs. Thus, there is a growing demand for innovative solutions that can intelligently manage and optimize HVAC operations in pharmaceutical settings. Such solutions should be capable of reducing energy consumption and costs while ensuring compliance with the stringent environmental and safety standards of the pharmaceutical industry. The present disclosure addresses these needs by introducing an advanced energy optimization system specifically designed for pharmaceutical HVAC applications.

### SUMMARY OF THE INVENTION

In accordance with one aspect of the present disclosure, a system for optimizing energy consumption by a pharma Heating, Ventilation, and Air Conditioning (HVAC) is disclosed. The system may include a digital twin configured to simulate an HVAC including at least one or more air handling units (AHUs) associated with a pharma plant. The digital twin may be simulated based on collected operational data and design data of the HVAC associated with the pharma plant. The system may further include a reinforcement learning (RL) agent that is configured to receive training using one or more environment models derived from the digital twin of the HVAC. In an embodiment, the RL agent may be further configured to learn one or more control strategies through interaction with at least the one or more environment models for generating one or more policies. Each policy may include at least the speed of one or more fans associated with the AHUs of the HVAC. In an embodiment, the RL agent may be further configured to output at least one policy including at least optimal speed of the one or more fans, based on processing of at least real-time predictions by at least the one or more environment models. In an embodiment, the one or more fans may be operated based on the corresponding optimal speed that leads to optimization of energy consumption, while maintaining at least required temperature, relative humidity, air changes per hour (ACPH), and pressure difference in a pharma room of the pharma plant.

In an embodiment, the required temperature may be maintained in the pharma room by the HVAC by continuously monitoring the pharma room and controlling fan speed, chilled water inlet temperature, chilled water valve opening, hot water valve opening, hot water inlet temperature, when the temperature is out of a predefined range. In an embodiment, the required relative humidity may be maintained in the pharma room by the HVAC by controlling chilled water valve opening, hot water valve opening, chilled water inlet temperature, hot water inlet temperature when the relative humidity is out of a predefined range. In an embodiment, the required ACPH may be maintained in the pharma room by the HVAC by regulating quantity of fresh inlet air into the AHU by controlling the fresh air damper opening. In an embodiment, the required pressure difference may be maintained in the pharma room by the HVAC to prevent issues including at least dust entry, cross contamination, and leakage of expensive drug ingredients, by keeping negative pressure inside the pharma room (process area) as compared to an outside surrounding area (positive pressure). In another embodiment, the required pressure difference may be maintained in the pharma room by the HVAC to prevent issues including at least dust entry, cross contamination, and leakage of expensive drug ingredients, by keeping positive pressure inside the pharma room (process area) as compared to an outside surrounding area (negative pressure).

In an embodiment, the simulation of the HVAC may include digital simulation of the AHUs including at least one or more return air fans, supply air fans, variable frequency drives (VFDs), variable air volume (VAV) dampers, fresh air dampers, bleed air variable control drives (VCDs), filters (such as normal filters and IEPA filters), chilled water coil, hot water coil, and ducts.

In an embodiment, the operational data may include at least real-time data related to at least off coil temperatures, return air temperature, supply air temperature, chilled water inlet temperature, chilled water return temperature, supply differential pressure, fan speed, fan power consumption, hot water inlet temperature, hot water return temperature, chilled water valve opening percentage, hot water valve opening percentage, air flow rate, and return air relative humidity. In an embodiment, the design data may include at least specifications of at least the one or more return air fans, supply air fans, VFDs, VAV dampers, fresh air dampers, bleed air VCDs, filters (such as normal filters and HEPA filters), chilled water coil, hot water coil, and ducts.

In an embodiment, the RL agent may be further configured to optimize the energy consumption, ensuring one or more constraints related to the required temperature, relative humidity, ACPH, and pressure difference are met by setting the one or more fans to their optimal speeds, and setting optimal values for chilled water inlet temperature, chilled water valve opening, hot water inlet temperature, hot water valve opening, thereby enabling savings in at least the energy consumption.

In an embodiment, the system may further include a first principles physics-based model that is simulated based on the processed operational data and the design data and is then validated by: (1) using real-time operational data or (2) performing manual inspection. In an embodiment, the system may further include a reduced order model (ROM) including at least design of experiments (DoE) data and outputs of the DoE data. The ROM may be generated based on the first principles physics-based model and simulation. In an embodiment, the one or more environment models may be generated based on at least the DoE data and the outputs of the DoE data. The one or more environment models may be validated based on real test values and predicted values. Further, in cases where the validation does not meet predefined error thresholds, preprocessing may be performed and then hyperparameter tuning may be employed for retraining the one or more environment models. In an embodiment, the digital twin may include at least one of: (1) the first principles physics-based model based on the operational data and the design data, (2) the ROM including the DoE data and outputs of the DoE data, and (3) the one or more environment models based on the ROM.

In an embodiment, the RL agent's training may further involve defining a reward function based on at least one of fan power consumption, fan speed, chilled water inlet temperature, chilled water valve opening, hot water inlet temperature, hot water valve opening, room temperature, relative humidity, ACPH, and pressure difference, and the RL agent learns by maximizing the received positive rewards for more desired outcomes and by minimizing the received negative rewards for less desired outcomes. In an embodiment, the RL agent's policies may be continuously updated based on interactions with at least the digital twin, the one or more environment models, and real-time operational data associated with the HVAC operating at the pharma plant. In an embodiment, the RL agent may be further configured to adapt to changing objectives, system and sub-system requirements, and new data post-deployment, and adjust its policies or generates new polices based on a continuous feedback loop from the real-time operational data of the HVAC operating at the pharma plant. In an embodiment, each policy may be validated over the digital twin or the one or more environment models, and the validation includes simulating the predicted outcomes over the digital twin or the one or more environment models and checking whether it optimizes the energy consumption. In an embodiment, the one or more environment models may be further configured to receive and process real-time operational data and generate the real-time predictions. These real time predictions may include off coil temperatures, return air temperature, supply air temperature, chilled water inlet temperature, chilled water return temperature, supply differential pressure, fan speed, fan power consumption, hot water inlet temperature, hot water return temperature, chilled water valve opening percentage, hot water valve opening percentage, air flow rate, and return air relative humidity.

Various objectives of the present disclosure collectively aim to create systems and methods for optimizing the energy consumption by the pharma HVAC. The present invention offers a multitude of advantages and applications in the realm of pharmaceutical HVAC management. Primarily, it significantly enhances energy efficiency, leading to reduced operational costs and a smaller environmental footprint. By employing the RL agent, the system dynamically adapts to changing conditions, ensuring optimal performance without manual intervention. This adaptability is crucial in the pharmaceutical industry, where strict environmental controls are essential for product quality and regulatory compliance. Further, use of the digital twin allows for accurate simulations of the HVAC system, facilitating proactive maintenance and preventing downtime by predicting and addressing potential issues before they escalate. This aspect is particularly beneficial for maintaining critical environmental parameters like temperature, humidity, air quality, and pressure, which are vital for ensuring the integrity of pharmaceutical products. Further, the system's comprehensive data analysis capability, integrating both operational and design data, offers insights into long-term performance trends and potential areas for improvement. Such data-driven decision-making can inform strategic planning and resource allocation, further optimizing energy use and reducing costs. In terms of applications, the disclosed systems are versatile and can be adapted to various pharmaceutical manufacturing settings, ranging from large-scale production facilities to specialized labs. It can also be tailored to specific requirements of different pharmaceutical processes, whether it's maintaining sterile conditions, controlling humidity for sensitive compounds, or ensuring consistent air quality for personnel safety. Thus, the advanced HVAC optimization systems represent a significant technological advancement in pharmaceutical facility management, offering improved efficiency, cost savings, and compliance with stringent industry standards.

These and other features and advantages of the present disclosure may be appreciated from a review of the following detailed description of the present disclosure, along with the accompanying figures in which like reference numerals refer to like parts throughout.

### BRIEF DESCRIPTION OF THE DRAWINGS

The novel features which are believed to be characteristic of the present invention, as to its structure, organization, use, and method of operation, together with further objectives and advantages thereof, will be better understood from the following drawings through which various preferred embodiments of the present invention will now be illustrated and described by way of example. It is expressly understood, however, that the drawings are for the purpose of illustration and description only and are not intended as a definition of the limits of the present invention. Embodiments of the present invention will now be described by way of example(s) in association with the accompanying drawings in which:
Figure 1a is a diagram that illustrates a system environment in which various embodiments of the present invention are practiced.
Figure 1b is a diagram that illustrates components of an application server of the system environment, in accordance with an embodiment of the present invention.
Figure 1c is a diagram that illustrates models of a digital twin of the system environment, in accordance with an embodiment of the present invention.
Figure 2 is a diagram that illustrates a reinforcement learning (RL) model, in accordance with an embodiment of the present invention.
Figure 3 is a diagram that illustrates an exemplary energy optimization system for optimizing energy consumption by AHUs of an HVAC of the system environment, in accordance with an embodiment of the present invention.
Figure 4 is a diagram that shows a dashboard illustrating online interaction of the simulated AHUs of the HVAC, in accordance with an embodiment of the present invention.
Figure 5 is a diagram that illustrates a flowchart of a method for developing an optimization solution for deployment, in accordance with an embodiment of the present invention.
Figure 6 is a diagram that illustrates a flowchart of a method for optimizing the energy consumption by the AHUs of the HVAC, in accordance with an embodiment of the present invention.

### DETAILED DESCRIPTION OF THE INVENTION

The present invention will now be described more fully hereinafter with reference to the accompanying drawings, which form a part hereof, and which show, by way of illustration, specific exemplary embodiments by which the invention may be practiced. This invention may, however, be embodied in many different forms and should not be construed as limited to the embodiments set forth herein; rather, these embodiments are provided so that this disclosure will be thorough and complete, and will fully convey the scope of the present invention to those skilled in the art. Among other things, the present invention may be embodied as methods, systems, or devices, or a combination thereof. Accordingly, the present invention may take the form of an entirely hardware embodiment, an entirely software embodiment, or an embodiment combining software and hardware aspects. The following detailed description is, therefore, not to be taken in a limiting sense.

HVAC stands for Heating, Ventilation, and Air Conditioning. It is a system designed to control the environmental conditions within a space, maintaining comfortable and safe indoor air quality and temperature. In the context of the pharmaceutical industry, the HVAC systems are of paramount importance due to several specific reasons. Many pharmaceutical products require precise environmental conditions during their manufacture. Parameters like temperature, humidity, and air purity must be maintained within strict limits to ensure product stability, efficacy, and safety. The HVAC system is responsible for providing and maintaining these controlled conditions. Further, the pharmaceutical industry is heavily regulated to ensure the safety and effectiveness of drugs. Regulatory bodies like the FDA (U.S. Food and Drug Administration) mandate stringent standards for manufacturing environments, which include specific requirements for air quality, temperature, and humidity. A well-designed HVAC system is crucial for compliance with these regulations. Furthermore, in pharmaceutical manufacturing, preventing contamination is crucial. The HVAC systems equipped with high-efficiency particulate air (HEPA) filters, for instance, play a vital role in filtering out airborne particles and microbes, thus maintaining a sterile environment. Furthermore, many pharmaceutical manufacturing processes involve handling potent compounds that can be hazardous. An effective HVAC system ensures adequate ventilation and air filtration, protecting employees from potential exposure to harmful substances.

The present invention discloses systems and methods for optimizing energy consumption by a pharma HVAC, particularly optimization of energy consumption by Air Handling Units (AHUs) in the pharmaceutical industry. The AHUs are among the most energy-intensive components in the HVAC system. Optimizing their operation may lead to significant energy savings, which is both economically and environmentally beneficial. Also, energy costs are a substantial portion of the operational expenses in pharmaceutical manufacturing. By optimizing AHU performance, a facility can reduce its energy consumption, leading to lower utility bills and operational costs. Also, many pharmaceutical companies are increasingly committed to sustainability. Reducing energy consumption through optimized HVAC operation aligns with broader environmental goals, like reducing greenhouse gas emissions. Furthermore, optimized operation of the AHUs can reduce wear and tear, extending the life of the equipment and reducing maintenance costs and downtime. In the pharmaceutical industry, it is critical to balance the need for a controlled environment with energy efficiency. Optimizing the AHUs ensures that environmental conditions meet regulatory standards without unnecessary energy expenditure. Thus, the HVAC system is vital in the pharmaceutical industry for maintaining product quality, ensuring regulatory compliance, preventing contamination, and safeguarding employee health. Optimizing the energy consumption, especially in components like AHUs, is crucial for achieving energy efficiency, reducing costs, meeting sustainability objectives, maintaining equipment health, and balancing environmental control with energy use.

The present invention will now be described with reference to the accompanying drawings which should be regarded as merely illustrative without restricting the scope and ambit of the present invention.

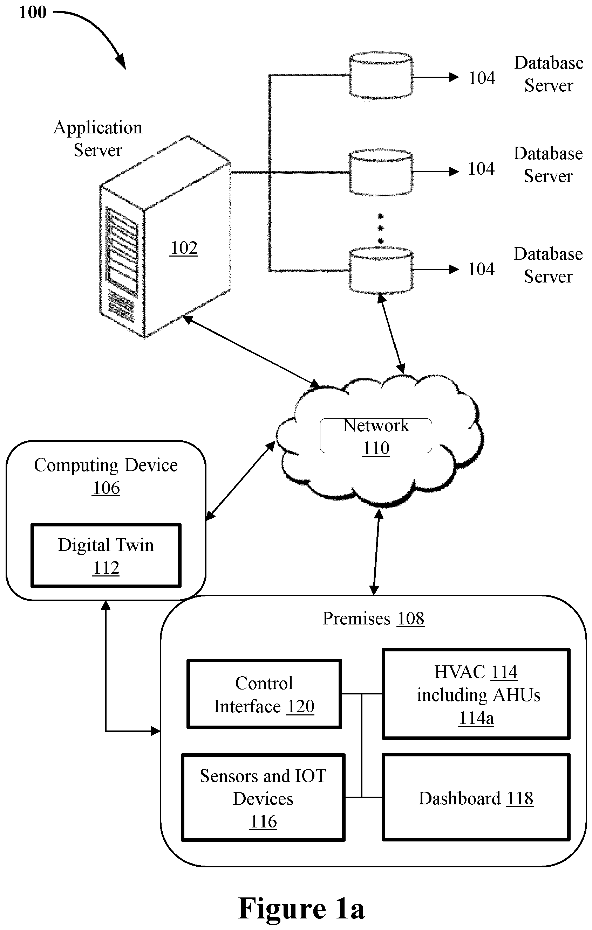

Figure 1a is a diagram that illustrates a system environment 100 in which various embodiments of the present invention are practiced. The system environment 100 may include one or more servers such as an application server 102 and a database server 104. The system environment 100 may further include a computing device 106 and a premises 108. The application server 102, the database server 104, the computing device 106, and one or more devices, sensors, or equipment installed in the premises 108 may be configured to communicate with each other via a communication network such as a network 110.

The application server 102 is a framework, a type of software engine, that delivers applications to client computers or devices. The application server 102 may act as a middle layer between the end-user interface and the backend database and business applications, enabling the hosting and delivery of high-level applications, often web based. The application server 102 may be configured to primarily manage the logic of one or more applications. This means that the application server 102 may be configured to handle the execution of program commands, computation, data retrieval, and performance tasks. The application server 102 may be further configured to facilitate the connection between front-end interfaces and back-end databases and servers. For instance, IBM WebSphere server may connect to various databases like Oracle, SQL Server, or DB2 to fetch and update data as required by the application. The application server 102 may be further configured to provide various middleware services like transaction management, messaging services, and authentication. The application server 102 may be further configured to enable applications to scale to handle increased loads and can manage sessions across multiple servers. The application server 102 may be further configured to include an API gateway or management tools to control access to one or more APIs. The application server 102 may be further configured to provide a complete development and runtime environment for the one or more applications. Examples of the application server 102 may include, but are not limited to, Java EE Application Servers, Microsoft Windows-based Application Servers, Platform as a Service, SAP NetWeaver for enterprise applications, and Zend Server for PHP applications.

In an exemplary embodiment, the application server 102 may serve as a robust platform for hosting and executing various models, which may include machine learning (ML) models, deep learning (DL) models, reinforcement learning (RL) models, and other computational and performance-based models. The application server 102 may be capable of running different types of models. These could be algorithms or programs designed for specific tasks such as model training and learning, predictive analytics, simulations, computations, authentications, data preparation, or data processing. The application server 102 may be designed to receive a variety of data inputs from multiple sources. For example, operational data may come from one or more sensors and Internet of Things (IoT) devices (as shown by 116 installed in the premises 108) that monitor and measure one or more variables like at least one of: off coil temperatures, return air temperature, supply air temperature, chilled water inlet temperature, chilled water return temperature, supply differential pressure, fan speed, fan power consumption, hot water inlet temperature, hot water return temperature, chilled water valve opening percentage, hot water valve opening percentage, air flow rate, and return air relative humidity. Further, design data including at least one or more specifications of at least one or more equipment associated with the HVAC 114 or AHUs 114a of the HVAC 114 may come from the database server 104. The equipment may correspond to at least one or more return air fans, supply air fans, variable frequency drives (VFDs), variable air volume (VAV) dampers, fresh air dampers, bleed air variable control drives (VCDs), filters (such as normal filters and HEPA filters), chilled water coil, hot water coil, and ducts. The various types of data (as described above but not limited to) may be received by the application server 102 in real-time or near real-time or based on a scheduled time as per the industry or application requirement or as defined by an admin user.

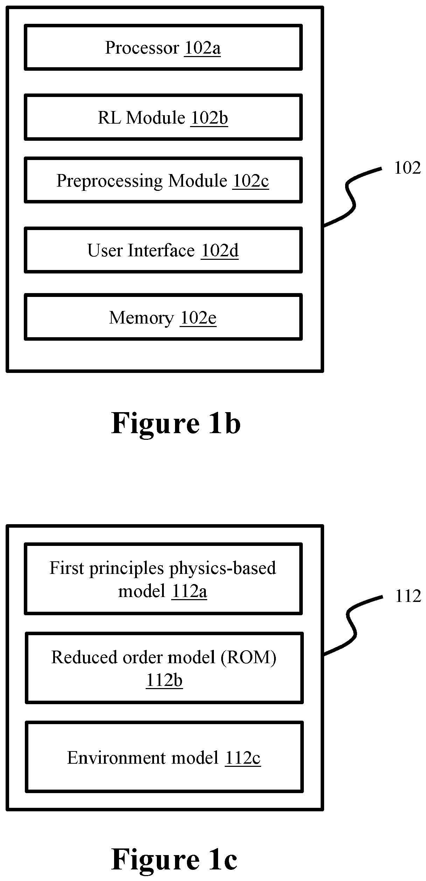

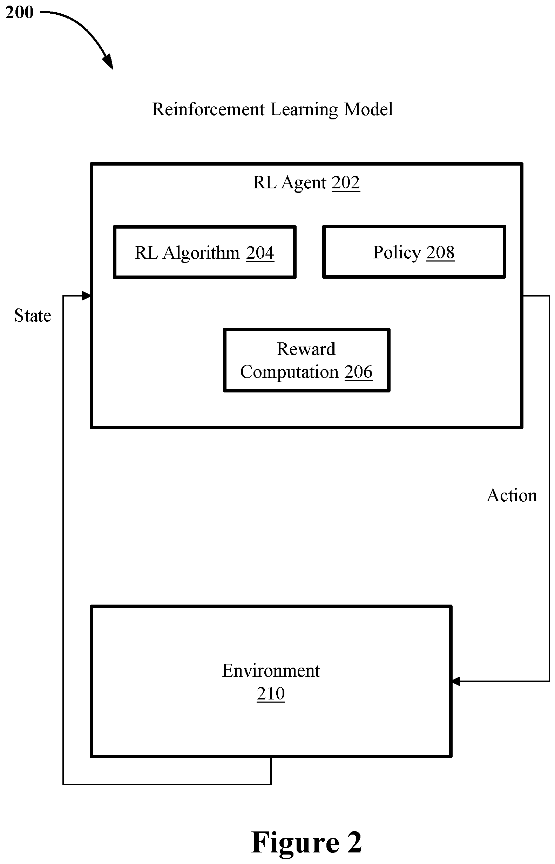

In the disclosed HVAC optimization system 100 for the pharmaceutical industry, the application server 102 performs several critical and sophisticated roles. In an embodiment, the application server 102 may be configured to process and structure the operational data, ensuring it is clean and organized for effective use. This may include handling real-time data related to temperatures, pressure, fan speed, valve openings, power consumption, and air flow rates. It also manages the design data encompassing specifications of the components like fans, dampers, filters, coils, and ducts. In an embodiment, the application server 102 may be further configured to run the digital twin 112 of the HVAC system 114 or its subparts such as one or more AHUs 114a. This may involve simulating the HVAC 114 or the AHUs 114a using a first principles physics-based model (as shown by 112a in Figure 1c), which is validated with real-time operational data or manual inspection. Additionally, the application server 102 may manage a Reduced Order Model (ROM) (as shown by 112b in Figure 1c) generated from design of experiments (DoE) data, facilitating faster and efficient simulations. The application server 102 may also generate and validate one or more environment models (as shown by 112c in Figure 1c) based on at least the DoE data and outputs of the DoE data. These models represent various scenarios and conditions of the HVAC 114 or the AHUs 114a. In an embodiment, the application server 102 may be further configured to train an RL agent (as shown by 202 in Figure 2) using the environment models 112c. The RL agent 202 may be configured to learn and develop one or more control strategies, generating one or more policies for optimal HVAC operation. These policies consider one or more factors like fan speed, temperature settings, and/or valve openings to optimize the energy consumption while maintaining required operating conditions, for example, maintaining at least required temperature, relative humidity, air changes per hour (ACPH), and pressure difference in one or more pharma rooms of the pharma plant. In an embodiment, the application server 102 may be further configured to utilize the RL agent 202 to make real-time decisions, adjusting the operation of the HVAC system 114 for the optimal performance. This may include setting at least fan speeds and other control parameters based on the policies developed by the RL agent 202. In an embodiment, the application server 102 may be further configured to enable the RL agent 202 to continuously update its policies based on new data and changing system requirements. This may ensure the HVAC system 114 or the AHUs 114a remains efficient and effective over time, adapting to changes in the pharmaceutical plant's operations or environment. In an embodiment, the application server 102 may be further configured to continually monitor the performance of the HVAC system 114 or the AHUs 114a against the established policies. It may validate the effectiveness of these policies by simulating predicted outcomes using the digital twin 112 or environment models 112c, ensuring optimal energy consumption is achieved. Thus, the application server 102 serves as a central hub for data management, simulation, model generation, training of the RL, real-time control, continuous learning, and performance validation. Its functions are integral to achieving the energy optimization in the pharmaceutical plant's HVAC 114 or AHU 114a while maintaining the necessary environmental conditions for pharmaceutical manufacturing.

The database server 104 is a computer system that provides other computers, servers, and applications with services related to accessing and retrieving data stored in databases. It is a key component in a client-server architecture, where it is dedicated to managing database resources, executing database operations, and ensuring data integrity and security. Examples of the database server 104 include, but are not limited to, Relational Database Servers (such as Oracle Database, Microsoft SQL Server, MySQL, and PostgreSQL), NoSQL Database Servers (such as MongoDB and Cassandra), and In-Memory Databases (such as Redis and SAP HANA). The database server 104 plays a crucial role in housing all the data that the application server 102 or other devices, simulators, models, controllers, and applications may need to function effectively. It is the repository of current and historical data, which is essential for monitoring the system's performance, optimizing operations, and ensuring energy savings. In the context of the pharma HVAC process, the database server 104 may be responsible for storing all the unstructured or structured data, such as the operational data, the design data, and the KPIs, objectives, or constraints. In an embodiment, the database server 104 may be further configured to store the one or more control strategies and the corresponding polices generated by the RL model or agent 202. In an embodiment, the database server 104 may be further configured to store the first principles physics-based model 112a, the ROM 112b, and the environment models 112c associated with the digital twin 112 of the HVAC 114 or the AHUs 114a. In an embodiment, the database server 104 may be further configured to store the predicted outcomes with respect to at least one or more of: fan power consumption, fan speed, chilled water inlet temperature, chilled water valve opening, hot water inlet temperature, hot water valve opening, room temperature, relative humidity, ACPH, and pressure difference. In an embodiment, the database server 104 may be further configured to store the optimal outcomes (such as at least optimal speed of the one or more fans associated with the HVAC 114 or the AHUs 114a) predicted by the RL agent 202 at one or more time instances based on analysis and processing of real-time operation data by the application server 102.

The computing device 106 is an electronic device that is capable of processing, storing, and retrieving the required data to perform some kind of computations and operations. Such devices usually allow for input and output operations, making them interactive tools for a wide array of applications. One or more users may input data into the computing device 106 through various means, such as keyboards, touch screens, mice, voice recognition, sensors, and cameras. The computing device 106 may convey the results of their computing processes to the users via outputs like displays, speakers, printers, and actuators. Examples of the computing device 106 may include, but are not limited to, personal computer(s), desktop(s), laptop(s), smartphone(s), tablet(s), or wearable device(s). In an embodiment, the computing device 106 may be configured to integrate various data sources for collecting the data in real-time or near real-time and run one or more analysis tools on the collected data for providing a comprehensive control interface, enabling the user to interact with the digital twin 112, RL agent 202, and others effectively, serving as a bridge between the physical and virtual environments that can enhance understanding, decision-making, and operational and energy efficiency.

In an embodiment, the computing device 106 may be used by a user to build, create, or simulate a virtual representation i.e., the digital twin 112 of an installed system such as the HVAC 114 or the AHUs 114a of the HVAC 114. In an embodiment, the computing device 106 may be further configured to run software or applications that may allow or assist the user to design and simulate the digital twin 112, creating a multi-dimensional model that can be visualized in one-dimension (1D), two-dimension (2D), or three-dimension (3D) interfaces. In an embodiment, the digital twin 112 may be configured to simulate the HVAC 114 or the AHUs 114a of the HVAC 114 based on the collected operational data and design data. In an embodiment, the computing device 106 may be used to simulate one or more scenarios, analyze system performance, and optimize operations based on the data received from the physical counterpart. In some embodiments, the user may use the computing device 106 to provide one or more inputs to adjust one or more parameters of the digital twin 112 and perform manual interventions when the automated systems do not suffice, or when unique or unforeseen circumstances arise. The computing device 106 may trigger one or more operations in the real-world systems by generating and sending one or more commands from the digital twin's interface, effectively allowing the user to control one or more equipment operational aspects of the HVAC system 114 remotely.

The premises 108 refers to an environment or industrial plant where various systems and services are installed to make the space functional and ready for production and operation. This can include infrastructure or plants such as a pharmaceutical plant. The pharmaceutical plant is a specialized facility designed to produce pharmaceutical products, such as medications, vaccines, and other medical compounds. These plants are highly regulated environments due to the critical nature of the products they produce. The layout and operation of the pharmaceutical plant are meticulously planned to ensure product quality, safety, and compliance with stringent regulatory standards. The pharmaceutical plant is typically divided into various rooms or compartments, each designated for specific stages of production or for handling different types of products. For instance, there might be separate areas for raw material storage, formulation, blending, tablet pressing, coating, packaging, and quality control. Further, each room in the pharmaceutical plant has unique ambient requirements, depending on the processes taking place and the products being handled. For example, the parameters may correspond to temperature, air flow, humidity, and pressure. The HVAC system 114 is crucial in the pharmaceutical plant. The HVAC system 114 is used to control the temperature, humidity, air flow, and pressure within each room. Also, high-efficiency particulate air (HEPA) filters are often used in the HVAC system 114 to remove airborne particles and contaminants. Maintaining air quality is critical, especially in cleanrooms and areas where sterile or aseptic processes occur. Also, different rooms in the pharmaceutical plant are maintained at different pressure levels to control the flow of air and prevent cross-contamination. For instance, areas where sensitive products are manufactured may be kept at a higher pressure relative to surrounding areas to prevent the ingress of contaminants. Thus, due to the diverse requirements across different rooms, the HVAC system 114 in the pharmaceutical plant may be customized. It may include advanced control systems to adjust conditions in real-time, based on the specific requirements of each compartment.

In the pharmaceutical plant, the AHUs 114a are a critical component of the HVAC system 114, designed to condition and circulate air as part of the facility's air quality and climate control strategies. The AHUs 114a may include at least one or more return air fans, supply air fans, variable frequency drives (VFDs), variable air volume (VAV) dampers, fresh air dampers, bleed air variable control drives (VCDs), filters (such as normal filters and HEPA filters), chilled water coil, hot water coil, and ducts.

The return air fans draw air from various rooms of the plant back into the AHU 114a for reconditioning. In pharmaceutical settings, this is crucial for maintaining consistent environmental conditions and for removing any potential airborne contaminants. After conditioning, the air is redistributed to different areas of the plant through the supply air fans. The controlled distribution is essential in maintaining the required clean and sterile environment in production areas. The VFDs are used to control the speed of the fans based on the demand. In pharmaceutical plants, this allows for precise control over air flow, contributing to energy efficiency and the maintenance of strict environmental conditions. The VAV dampers adjust the volume of airflow to different areas. In the pharmaceutical plant, the VAV dampers are essential for maintaining specific conditions in each room, as different production areas may have different air quality and climate control requirements. The fresh air dampers control the amount of fresh air introduced into the system. In pharmaceutical manufacturing, the introduction of fresh air is critical for maintaining air quality, especially in controlled environments like a pharma room. The bleed air VCDs are used to regulate the pressure and flow of bleed air, which is the portion of recirculated air that is exhausted from the building. In pharmaceutical settings, managing bleed air is important to control contamination and maintain pressure differentials between areas. Filtration is crucial in the pharmaceutical plant. Normal filters remove large particles, while HEPA filters can remove 99.97% of particles as small as 0.3 microns. This level of filtration is essential for maintaining sterile environments and preventing contamination. The chilled water coil cools the air by removing heat via chilled water. In the pharmaceutical plant, precise temperature control is often necessary for both product quality and storage conditions. The hot water coil is used to heat the air. This is particularly important in environments requiring strict temperature control for certain manufacturing processes or for comfort during colder conditions. The ducts distribute the conditioned air throughout the plant. In a pharmaceutical setting, ductwork must be designed to ensure even distribution of air and to prevent contamination, often requiring specialized designs like smooth surfaces and minimal bends for easy cleaning and maintenance.

In an embodiment, the sensors and IoT devices 116 may be installed in the premises 108 and are an integral part of the premises 108 such as the pharmaceutical plant. They are used for sensing things and devices. The sensor attains a physical parameter and converts it into a signal suitable for processing (e.g., electrical, mechanical, or optical) the characteristics of any device or material to detect the presence of a particular physical quantity. The output of the sensor is a signal which is converted to a human-readable form like changes in characteristics, changes in resistance, capacitance, impedance, etc. The sensors and IoT devices 116 are essential as they help to monitor, capture, and control the one or more process parameters such as temperature, pressure, humidity, air flow, power, and/or fan speed but should not be considered as limiting to the scope of the present disclosure. The sensors may also help to detect any issues with the HVAC system 114 or the AHUs 114a of the HVAC system 114, such as a malfunctioning dampers, coils, drives, drives, and ducts or clogged filters. This can help to prevent downtime and reduce maintenance costs. There are various types of sensors such as accelerometers, air quality sensors, image-capturing sensors, current sensors, voltage sensors, flow sensors, gyroscopes, humidity sensors, level sensors, motion sensors, pressure sensors, proximity sensors, occupancy sensors, and temperature sensors. Other sensors may include SDPT sensors, SAT sensors, RAT sensors, RRH sensors, airflow sensors, velocity sensors, fan speed sensors, chilled/hot water valve opening sensors, and chilled/hot water inlet temperature sensors. One or more of these sensors may be used for monitoring and measuring the required process parameter(s). The IoT devices may be used to collect the data from the sensors and other components of the HVAC system 114 or the AHUs 114a of the HVAC system 114. This data may be analyzed to identify patterns and trends, which can help to optimize the performance of the HVAC system 114 or the AHUs 114a of the HVAC system 114. For example, the data can be used to determine the optimal temperature, air flow, pressure, and humidity levels for the one or more rooms of the pharmaceutical plant. Thus, the sensors and IoT devices 116 may integrate with the existing setup to collect the data from the premises 108 and communicate the collected data to the application server 102 or the database server 104.

In an embodiment, the dashboard 118 is a graphical user interface (GUI) that may be configured to display information and allow interaction with the disclosed system or process. The dashboard 118 may include various features, such as buttons, sliders, graphs, charts, tables, and input and output indicators. The dashboard 118 may be used for various purposes, such as monitoring, controlling, analyzing, and optimizing the disclosed system or process. In the pharmaceutical plant, the dashboard 118 may be used to manage the fan speed, temperature (such as coil temperatures, return air temperature, supply air temperature, chilled water inlet temperature, chilled water return temperature, hot water inlet temperature, and hot water return temperature), air flow rate (such as ACPH), differential pressure, and return air relative humidity. In an embodiment, the dashboard 118 may allow the user to input data or commands that affect the operation of the HVAC system 114 or the AHUs 114a of the HVAC system 114. The user can also adjust the settings of at least one of: the power supply, the air flow rate, the temperature value, the cooling system, and the like. In an embodiment, the dashboard 118 may display the output data. The dashboard 118 may also show the status and the performance of the HVAC system 114 or the AHUs 114a of the HVAC system 114 or the components/equipment of the AHUs 114a.

In an embodiment, the control interface 120 is a device or a software (or a combination thereof) that allows the user or an application to interact with and control the HVAC system 114 or the AHUs 114a of the HVAC system 114 or the components/equipment of the AHUs 114a. It can display the status, the parameters, and the performance of the HVAC system 114 and its components/equipment. It can also receive the input data or commands from the application server 102, the database server 104, the computing device 106, the digital twin 112, or the user (such as an admin user) and communicate them to the relevant devices or controllers or actuators that regulate the operation of the HVAC system 114 and its components/equipment. In an embodiment, the control interface 120 may be installed in the premises 108 as a standalone device for supporting the operation of the HVAC system 114 or the AHUs 114a of the HVAC system 114 or the components/equipment of the AHUs 114a. This serves as a command center, where adjustments to the system's operation may be made. It is a communication hub that receives instructions to alter one or more operational settings of the HVAC system 114 or the AHUs 114a of the HVAC system 114 or the components/equipment of the AHUs 114a. The instructions may be received from the application server 102, the database server 104, the computing device 106, or the digital twin 112 via the network 110 without limiting the scope of the present disclosure. In an exemplary embodiment, the control interface 120 receives a command from the RL agent 202 to reduce fan speed by 25% by lowering down the power supply to the fan by 10%. The control interface 120 may then send this instruction to one or more regulators or controllers or actuators. For example, the control interface 120 may generate and send a fan speed controlling instruction or command to a power regulator (which is a device that controls the input power supply to the fans according to the received command or the system's requirement). The power regulator may then reduce the power supply to the fans by 10%. Such regulation may minimize the consumption of energy by the HVAC system 114 or the AHUs 114a of the HVAC system 114 or the components/equipment of the AHUs 114a, thereby causing energy savings during the process. The above example has been included for illustrative purposes only and should not be construed as limiting to the scope of the present invention.

The network 110 is a communication channel between two or more computers or devices that are linked together to share resources, exchange files or commands, or allow electronic communications. The computers on the network 110 may be linked through cables, telephone lines, radio waves, satellites, or infrared light beams. Examples of wired networks may include, but are not limited to, ethernet networks, fiber optic networks, telephone networks, power line communications (PLC), and coaxial networks. Examples of wireless networks may include, but are not limited to, Wi-Fi networks, cellular networks, Bluetooth, satellite networks, near field communication (NFC), Zigbee and Z-Wave. The network 110, be they wired or wireless, plays a critical role in the connectivity of devices and servers of the system environment 100. In an installation like the pharmaceutical plant, the network 110 may be configured to facilitate communication between sensors, regulators, controllers, actuators, HVAC's components/equipment, security systems, and the various servers and devices that manage operations and data storage. Further, the network 110 may be configured to support the transfer of the operational and design data (either real-time or historical) to the application server 102 where it is processed, analyzed, and turned into actionable insights. Further, the network 110 may be configured to allow the database server 104 to receive and store the operational data and serve it upon request to the application server 102 or end-user devices. Further, the network 110 may be configured to enable end-user devices (such as the computing device 106) to interact with the system for monitoring, control, and manual intervention. This interconnectedness ensures that all components of the system environment 100 may work cohesively to maintain operations, gather data, process inputs, and enable a smart, responsive infrastructure.

Figure 1b is a diagram that illustrates components of the application server 102, in accordance with an embodiment of the present invention. The application server 102 may include one or more components such as at least one of: a processor 102a, an RL module 102b, a preprocessing module 102c, a user interface (UI) 102d, and a memory 102e. Each component is intricately linked, ensuring the application server 102 functions as a cohesive unit. The processor 102a ensures swift and accurate execution of tasks, the RL module 102b adapts and optimizes operational strategies, the preprocessing module 102c guarantees the quality of data fed into the system 100, the UI 102d provides a user-friendly platform for interaction with the system 100, and the memory 102e provides a storage mechanism or medium for storing the data, logics, code, algorithms, models, and the like. Together, these components and others may form a robust framework for optimizing the energy consumption by the pharma HVAC system 114, ensuring efficiency, precision, and ease of operation.

The processor 102a is the core computing unit of the application server 102, responsible for executing program instructions and managing the system's operations. Its primary function is to process complex calculations rapidly, handle multitasking between various components of the system 100, manage the flow of data, and process the data and applications. For instance, the processor 102a may be responsible for running simulations by using the digital twin 112, processing large datasets for the RL module 102b, and ensuring real-time responsiveness. It may handle tasks like calculating the energy efficiency for different operational settings or running predictive models to forecast future process outcomes. The processor's efficiency is crucial in managing these computationally intensive tasks without lag, ensuring the system's overall smooth functioning.

The RL module 102b is a specialized component that applies one or more types of learning techniques to optimize one or more process or operational parameters. It learns from the simulations of the digital twin 112 and/or its models such as the environment models 112c, developing the one or more control strategies for controlling and optimizing the one or more variables such as at least one of the: fan power consumption, fan speed, chilled water inlet temperature, chilled water valve opening, hot water inlet temperature, hot water valve opening, room temperature, relative humidity, ACPH, and pressure difference. For example, the RL module 102b may be configured to analyze data patterns to identify optimal process parameters that can yield the highest savings in at least the energy consumption. The RL module 102b may also adapt its strategies based on ongoing feedback or real-time data processing, thereby continuously refining its approach to maintain optimal process conditions.

The preprocessing module 102c is essential for preparing and refining the data before it is used in the system 100. It cleans, normalizes, and structures incoming data, ensuring its quality and consistency. This might involve filtering out irrelevant data points, correcting errors, or transforming data formats. The preprocessing is crucial because the accuracy and reliability of the system's simulations and predictions heavily depend on the quality of the input data. The preprocessing module 102c may be configured to perform the data preprocessing which includes, but is not limited to, filtering out noise, dealing with missing values, and normalizing the data. Missing data may be handled by imputation methods where the missing value is predicted based on the available data, or by using models like the digital twin 112 that can simulate the missing data points. Further, invalid data, identified through anomaly detection algorithms, may be either corrected or removed to prevent it from skewing the analysis. The structured data may then be used to train the RL agent 202 and make it learn to formulate the one or more control strategies and generate the corresponding policies.

The UI 102d is the visual and interactive component through which one or more operators may visualize, control, and monitor the one or more operations and functionalities of the system 100. It is designed for clarity and ease of use, presenting complex data and system statuses in an understandable format. For example, the UI 102d may display a real-time dashboard with key metrics like power supply settings, fan speed, temperature readings, air flow reading, energy consumption, supply and return temperature, pressure, and the like. The UI 102d may also allow the one or more operators to input new settings, respond to system alerts, or access historical data reports. The UI 102d may be crucial for bridging the gap between the system's advanced technical operations and the user, enabling efficient and informed decision-making.

The memory 102e stores data and programs that are used by the applications running on the application server 102. The memory 102e may allow the applications to access the data and programs faster. The memory 102e may also enable the applications to share data and programs among different users and processes.

Figure 1c is a diagram that illustrates the models of the digital twin 112, in accordance with an embodiment of the present invention. The system's integration of the digital twin 112 for the HVAC system 114, the AHUs 114a of the HVAC system 114, or the components/equipment of the AHUs 114a, offers a sophisticated approach for optimizing the energy consumption. The digital twin 112 is a comprehensive virtual representation, crafted and simulated using the collected operational data and the design data. The digital twin 112 may include several interconnected models, each serving distinct but complementary purposes. For example, the digital twin 112 may include at least one of: the first principles physics-based model 112a, the ROM 112b, and the one or more environment models 112c.

The first principles physics-based model 112a is the foundational layer of the digital twin 112. The model 112a is a comprehensive representation of the HVAC system 114, the AHUs 114a of the HVAC system 114, or the components/equipment of the AHUs 114a based on physical laws. It incorporates the operational data and the design data. The operational data may provide real-time conditions, while the design data may define the physical constraints and capabilities. The model 112a simulates the behavior by applying physical laws and equations that govern the system operation such as that of the HVAC system 114, the AHUs 114a of the HVAC system 114, and/or the components/equipment of the AHUs 114a.

The ROM 112b is designed to provide a faster computational solution while still maintaining a high degree of accuracy. The ROM 112b includes at least the DoE data and outputs of the DoE data. The ROM 112b may enable quick simulations and predictions, making it an invaluable tool for real-time decision-making and control. In an embodiment, the ROM 112b may be generated from the first principles physics-based model 112a to make computations more manageable while retaining essential characteristics and behaviors of the HVAC system 114, the AHUs 114a of the HVAC system 114, and/or the components/equipment of the AHUs 114a. The ROM 112b uses DoE methodology to explore the relationship between various input and process variables and their impact on the system operation. For instance, if we consider four input variables, such as temperature, differential pressure, and fan speed, each with five possible values, the ROM 112b explores all combinations (5^3 = 125 different scenarios). For each scenario, it computes the expected outputs. This process creates a comprehensive dataset that captures how changes in inputs affect the outputs, providing a valuable tool for understanding and predicting the system's behavior.

The environment models 112c represent the various external and internal factors that can influence the process. These models 112c are tailored to simulate different scenarios, conditions, and operational contexts in which the HVAC system 114, the AHUs 114a of the HVAC system 114, and/or the components/equipment of the AHUs 114a might operate. They are typically built using a combination of data-driven approaches, such as machine learning algorithms, and empirical data. In an embodiment, the environment models 112c may be generated based on the ROM 112b i.e., the DoE data and outputs of the DoE data. In some embodiments, the environment models 112c may also be generated based on the operational data along with the DoE data and their outputs. These models 112c may be configured to simulate specific aspects of the operation, such as off coil temperature, return air temperature, supply air temperature, chilled water inlet temperature, chilled water return temperature, supply differential pressure, fan speed, fan power consumption, hot water inlet temperature, hot water return temperature, chilled water valve opening percentage, hot water valve opening percentage, air flow rate, and return air relative humidity. For example, the environment model 112c may use the ROM's data to generate the real-time predictions. By simulating the above aspects, the environment models 112c may enable precise control and optimization of the HVAC system 114, the AHUs 114a of the HVAC system 114, and/or the components/equipment of the AHUs 114a in the pharmaceutical plant. They allow for predictive adjustments, energy efficiency improvements, and ensure that the stringent environmental conditions required for pharmaceutical production are consistently met. These models 112c are also useful for testing and developing control strategies because they provide a focused view of specific parts or processes within the HVAC system 114, the AHUs 114a of the HVAC system 114, and/or the components/equipment of the AHUs 114a. For example, these models 112c are particularly useful for training the RL agent 202, as they provide a diverse range of scenarios for the RL agent 202 to learn from. The RL agent 202 may use these environment models 112c to understand how different conditions affect the process and to develop strategies and policies for optimizing performance under various circumstances.

Figure 2 is a diagram that illustrates the RL model 200 (i.e., the RL module 102b of Figure 1b), in accordance with an embodiment of the present invention. In reinforcement learning, an agent is configured to learn to make decisions by performing one or more actions in an environment to achieve a goal. The RL model 200 includes several key components such as the RL agent 202. This is the decision-maker that learns from an environment 210 (for example, the one or more environment models 112c) through interactions. The RL agent 202 executes one or more RL algorithms 204 (such as Q-learning, Deep Q Networks (DQN), or Policy Gradients) and makes observations, takes actions, and receives feedback in the form of rewards. The environment 210 is everything the RL agent 202 interacts with and may be external to the RL agent 202. In the RL model 200, the environment 210 represents a space or context in which the RL agent 202 may operate. The environment 210 is useful for testing and developing the control strategies because it provides a focused view of specific parts or processes within the HVAC system 114, the AHUs 114a of the HVAC system 114, and/or the components/equipment of the AHUs 114a. For example, the environment 210 is particularly useful for training the RL agent 202, as they provide a diverse range of scenarios for the RL agent 202 to learn from. The RL agent 202 may use the environment 210 to understand how different conditions affect the process and to develop strategies and policies for optimizing performance under various circumstances. Further, a state is a concrete and immediate description of the situation in which the RL agent 202 finds itself. It is the specific condition or context within the environment 210 at a particular time. Further, actions are a set of possible moves or decisions or strategies the RL agent 202 may make in any given state. Each action taken by the RL agent 202 may lead to a new state and a corresponding reward.

The reward computation 206 may be a feedback signal to the RL agent 202 that rates the success of an action. This is a mechanism by which the RL agent 202 assesses the success of its actions. A reward function in this context may assign higher rewards for actions that lead to reduced energy consumption. In an embodiment, the reward function may be based on at least one of the fan power consumption, fan speed, chilled water inlet temperature, chilled water valve opening, hot water inlet temperature, hot water valve opening, room temperature, relative humidity, ACPH, and pressure difference. The RL agent 202 may learn by maximizing the received positive rewards for more desired outcomes and by minimizing the received negative rewards for less desired outcomes. Further, the reward function may compute this signal, which is used to guide the agent's learning process. In an embodiment, the reward function may be based on the agent's intrinsic motivation to explore and learn new things, rather than on extrinsic rewards from the environment 210. This is a self-supervised method that can enable the RL agent 202 to discover novel and useful skills. In another embodiment, the reward function may be composed of multiple sub-goals or criteria, each with its own weight or importance. This is a flexible and expressive method that can capture the trade-offs and complexities of real-world problems.

Further, the policy 208 is a control strategy that the RL agent 202 employs to decide its actions at each state. It is essentially a mapping from one or more states to one or more corresponding actions, and the goal of the RL agent 202 is to learn and update the policy 208 that maximizes the expected reward in real-time or the expected sum of rewards over time. In the ongoing context, the policy 208 may involve a set of rules or strategies that optimize (e.g., minimizes) the energy consumption under different operating conditions. In an exemplary embodiment, the policy 208 may include at least the optimal speed of the one or more fans. Further, in response to this optimal policy, the one or more fans may be operated based on the corresponding optimal speed that can lead to optimization of the energy consumption. The policy 208 may be refined and updated over time as the RL agent 202 learns from new experiences and scenarios.

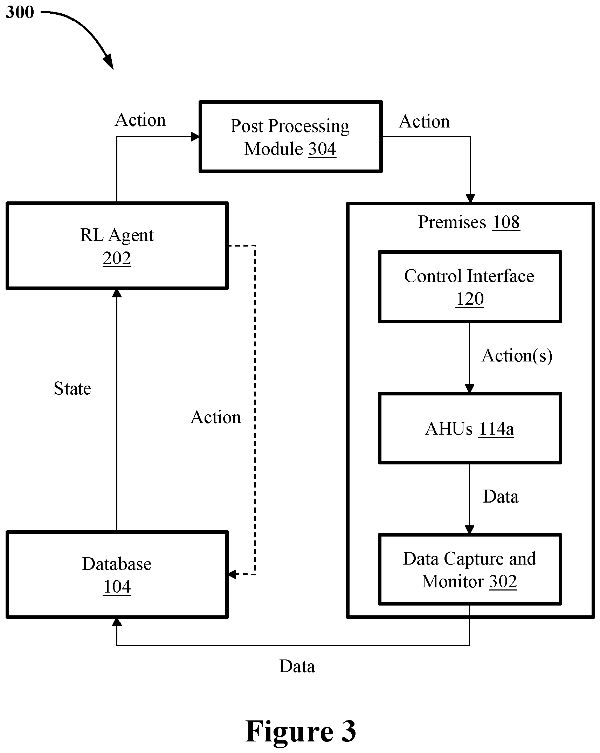

Figure 3 is a diagram that illustrates an exemplary energy optimization system 300 for optimizing the energy consumption by AHUs 114a of the HVAC 114, in accordance with an embodiment of the present invention. As shown, the system 300 includes at least the RL agent 202, the database 104, a post-processing module 304, and the premises 108 equipped with the control interface 120 and the AHUs 114a complimented by a data capture and monitoring system 302.

The system 300 is designed to control or regulate the power supply to the AHUs 114a for reducing at least the energy consumption by the one or more fans of the AHUs 114a. For example, the disclosed system 100 or 300 aims to minimize the energy consumption while ensuring that the one or more constraints are met by setting the one or more optimal values for the one or more process parameters, thereby enabling savings in at least the energy consumption. The constraints may include at least one or more of: (1) maintaining the required temperature in the pharma room by the HVAC 114 or the AHUs 114a by continuously monitoring the pharma room and controlling fan speed, chilled water inlet temperature, chilled water valve opening, hot water valve opening, hot water inlet temperature, when the temperature is out of a predefined range, (2) maintaining the required relative humidity in the pharma room by the HVAC 114 or the AHUs 114a by controlling chilled water valve opening, hot water valve opening, chilled water inlet temperature, hot water inlet temperature when the relative humidity is out of a predefined range, (3) maintaining the required ACPH in the pharma room by the HVAC 114 or the AHUs 114a by regulating quantity of fresh inlet air into the AHUs 114a by controlling the fresh air damper opening, (4) maintaining the required pressure difference in the pharma room by the HVAC 114 or the AHUs 114a to prevent issues including at least dust entry, cross contamination, and leakage of expensive drug ingredients, by keeping negative pressure inside the pharma room (process area) as compared to an outside surrounding area (positive pressure), and/or (5) maintaining the required pressure difference in the pharma room by the HVAC 114 or the AHUs 114a to prevent issues including at least dust entry, cross contamination, and leakage of expensive drug ingredients, by keeping positive pressure inside the pharma room (process area) as compared to an outside surrounding area (negative pressure).

In an embodiment, the control interface 120 may serve as a command center for the HVAC 114 or the AHUs 114a, where adjustments to the system's operation are made in real-time or near real-time. In an embodiment, the data capture and monitoring system 302 may be powered by the array of sensors and IoT devices 116 (Figure 1a) to continuously gather the data. In an embodiment, the database 104 serves as a repository for all collected data including at least the operational data, the design data, and the constraint data. In an embodiment, the RL agent 202 is a computational model that receives state data in real-time or near real-time from an environment such as the database 104, or from a physical environment (i.e., from the data capture and monitoring system 302), or from a virtual environment (i.e., from the digital twin 112 or the one or more environment models 112c), or any combination thereof. The state data may represent the one or more current conditions or variables of the HVAC 114 or the AHUs 114a. For example, the state data may include at least one or more of the real-time predictions with respect to at least the off coil temperature, the return air temperature, the supply air temperature, the chilled water inlet temperature, the chilled water return temperature, the supply differential pressure, the fan speed, the fan power consumption, the hot water inlet temperature, the hot water return temperature, the chilled water valve opening percentage, the hot water valve opening percentage, the air flow rate, and the return air relative humidity. Using at least one of the state information, the RL agent 202 may apply its learned policy 208 to decide on the optimal control strategy or action to take to achieve its objectives, such as reducing the power supply to the fans so as to optimize/minimize the energy consumption, ensuring the one or more constraints are met. The actions are the decisions or changes or control strategies the RL agent 202 may make to influence and optimize the HVAC process or at least the AHU process. For example, the one or more actions may include at least: (1) operating at least one fan based on the corresponding optimal speed that may lead to optimization of the energy consumption.

In some embodiments, once the RL agent 202 proposes the one or more actions, these actions may go through a validation process by the post-processing module 304. This may include simulated testing against the software environment or the digital twin 112 of the HVAC 114 or the AHUs 114a to ensure that the proposed actions will have the desired effect without causing system instability. If the one or more actions are successfully validated, then the post-processing module 304 may confirm that they are safe and effective to implement. Upon successful validation, the post-processing module 304 or the RL agent 202 or the database 104 may communicate the approved actions to the control interface 120. Further, in an embodiment, the control interface 120 may be configured to translate the received actions into specific commands for the HVAC 114 or the AHUs 114a. If the action involves reducing power by X% to reduce fan speed by A%, then the control interface 120 may generate and send a command to the power regulator or controller or actuator for reducing power to the fans by X%.

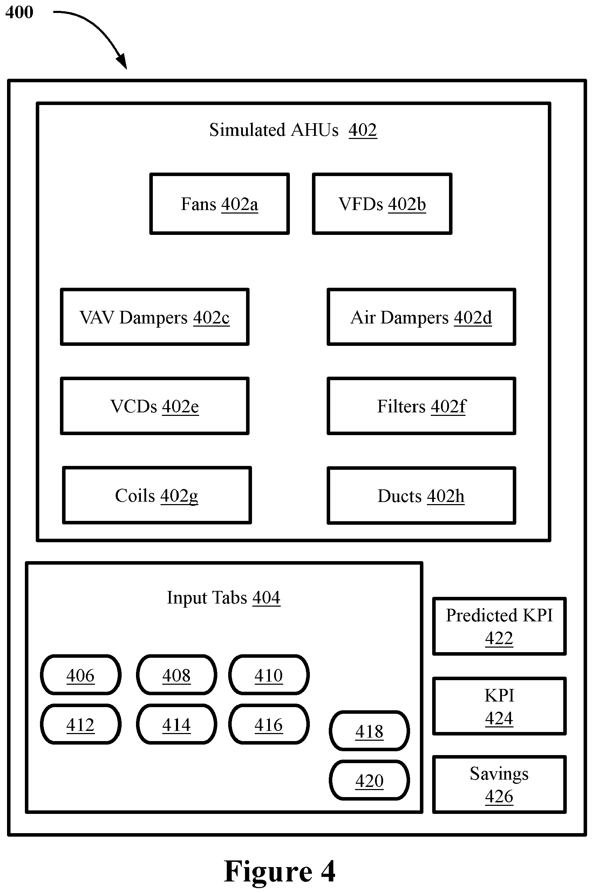

Figure 4 is a diagram that shows a dashboard 400 illustrating online interaction of the simulated AHUs 114a of the HVAC 114, in accordance with an embodiment of the present invention. The dashboard 400 is a graphical user interface (GUI or UI) designed for showing or simulating the online deployment and interaction of the simulated AHUs 402 (such as the digital twin 112 of the AHUs 114a shown in Figures 1 and 3) with the RL agent 202 (Figure 2), specifically tailored for managing and optimizing the AHU process. The dashboard 400 may be configured to provide a comprehensive and interactive platform for users to simulate, visualize, and enhance the efficiency of the AHU process, focusing on energy savings and process optimization.

As shown, the AHU block 402 on the dashboard 400 presents a simulated version of the AHU 114a, including components or equipment such as the fans (such as the one or more return air fans and supply air fans) 402a, the VFDs 402b, the VAV dampers 402c, the air dampers 402d, the VCDs 402e, the filters 402f, the coils (such as the one or more chilled water coils and hot water coils) 402g, and the ducts 402h. This simulation offers a virtual representation of the AHU's functioning, allowing for detailed monitoring and analysis. Further, the dashboard 400 may include several input tabs 404, enabling the one or more users to enter various operational parameters. For example, the input tab 406 may be used for entering RAT (return air temperature) and the input tab 408 may be used for entering RRH. Further, the input tab 410 may be used for entering CHW (chilled water) valve opening percentage and the input tab 412 may be used for entering HW (hot water) valve opening percentage. Further, the input tab 414 may be used for entering supply air and the input tab 416 may be used for entering CHW (chilled water) inlet temperature. In some embodiments, these data along with other data points may be automatically retrieved from the database 104 or a local memory. These inputs are critical for tailoring the AHU's operation to specific requirements. In real-time implementation, the one or more values may be automatically sourced from the sensors 116 or the database 104, or from both without limiting the scope of the present invention. Further, the dashboard 400 may include a predict tab 418 and an optimize tab 420. In an embodiment, pressing the predict tab 418 may activate the digital twin 112 or its environment model 112c. Based on the input data, the digital twin 112 or its environment model 112c may process and provide the real-time predictions on the one or more operational parameters such as the off coil temperature, the return air temperature, the supply air temperature, the chilled water inlet temperature, the chilled water return temperature, the supply differential pressure, the fan speed, the fan power consumption, the hot water inlet temperature, the hot water return temperature, the chilled water valve opening percentage, the hot water valve opening percentage, the air flow rate, and the return air relative humidity. Based on this, the predicted KPI interface 422 may display the predicted data. Further, the optimization tab 420, when activated, engages the RL agent 202, which analyzes at least one of the input data, the predicted data, or the real-time operational data to optimize the power consumption. The optimized KPI interface 424 may display these optimized values, and the savings interface 426 may display the percentage savings in the power supply. This feature is crucial for achieving cost-effective and efficient HVAC or AHU operation. If the optimizations are deemed acceptable and align with the one or more constraints, the optimal values, such as the optimal fan speed(s), may be implemented to realize tangible improvements in energy efficiency. This integration of simulation, prediction, and optimization in a user-friendly dashboard provides a powerful tool for the operators, enabling them to make data-driven decisions for enhanced operational efficiency.

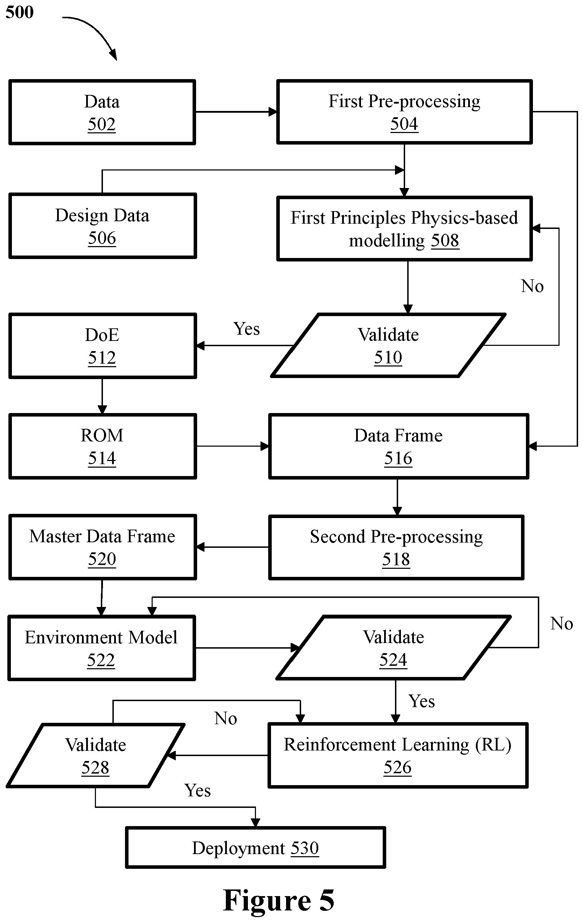

Figure 5 is a diagram that illustrates a flowchart 500 of a method for developing an optimization solution for deployment, in accordance with an embodiment of the present invention.

At step 502, the operational data is received. In an embodiment, the application server 102 may be configured to receive the operational data (either real-time data or historical data, or a combination thereof) from the database server 104, or directly from the sensors and IoT devices 116 or the data capture and monitor system 302. In some embodiments, the operational data may be received from a user-computing device (not shown) in a scenario where a user wants to manually enter the observed data. In an embodiment, the operational data may include at least one of the off coil temperature, the return air temperature, the supply air temperature, the chilled water inlet temperature, the chilled water return temperature, the supply differential pressure, the fan speed, the fan power consumption, the hot water inlet temperature, the hot water return temperature, the chilled water valve opening percentage, the hot water valve opening percentage, the air flow rate, and the return air relative humidity. The operational data of the HVAC system 114 or the AHUs 114a is comprehensive and essential for maintaining the required environmental conditions. Each data point provides insights into the system's performance and is crucial for informed decision-making and optimization. In an embodiment, the off-coil temperature refers to the temperature of the air immediately after it passes over the heating or cooling coils. It is an important indicator of the effectiveness of the heat exchange process in the AHU 114a of the HVAC system 114. In an embodiment, the return air temperature refers to the temperature of the air as it returns to the AHU 114a from various spaces within the facility such as the pharma room. Monitoring this helps in assessing the warming or cooling load required to maintain the desired indoor conditions. In an embodiment, the supply air temperature refers to the temperature of the air as it is supplied from the AHU 114a back into the facility. This data is crucial to ensure that the air distributed throughout the facility meets the necessary temperature specifications. In an embodiment, the chilled water inlet temperature refers to the temperature of the water entering the cooling coil. This data is vital for understanding and managing the cooling capacity. In an embodiment, the chilled water return temperature refers to the temperature of the water as it exits the cooling coil. Monitoring this helps gauge the efficiency of the cooling process. In an embodiment, the supply differential pressure refers to the pressure difference between the supply and return air. This data is key for maintaining optimal airflow and pressure balance, especially important in controlled environments like pharmaceutical facilities. In an embodiment, the fan speed indicates how fast the fans within the AHU 114a are operating. Adjusting fan speed can significantly impact airflow, temperature control, and energy usage. In an embodiment, the fan power consumption refers to the amount of energy consumed by the fans and other power consuming devices of the AHUs 114a. In an embodiment, the hot water inlet temperature refers to the temperature of the water entering the heating coil. In an embodiment, the hot water return temperature refers to the temperature of the water as it exits the heating coil. In an embodiment, the chilled water valve opening percentage shows how much the valve that controls the flow of chilled water to the cooling coil is open. It is critical for fine-tuning the cooling capacity of the system. In an embodiment, the hot water valve opening percentage shows how much the valve that controls the flow of hot water is open. In an embodiment, the air flow rate refers to the rate at which air is circulated through the system. It is essential for ensuring adequate ventilation and maintaining specific air change rates required in different areas of the pharmaceutical facility. In an embodiment, the return air relative humidity indicates the moisture content in the air returning to the AHUs 114a. Controlling humidity levels is critical in pharmaceutical environments to maintain product integrity and prevent contamination. By analyzing at least, the above operational data, the system can develop a detailed understanding of the HVAC's or AHU's performance. This data enables the creation of a highly accurate digital simulation of the HVAC 114 or the AHUs 114a and informs the agent's decision-making process, leading to the optimized operation for energy efficiency, while maintaining the constraints of the pharma room in the pharmaceutical plant.

At step 504, the first preprocessing is performed. In an embodiment, the preprocessing module 102c may be configured to perform the first preprocessing of the operational data. It may involve cleaning, normalizing, and structuring the incoming data, ensuring its quality and consistency. This might also involve filtering out irrelevant data points, correcting errors, or transforming data formats.

At step 506, the design data is received. In an embodiment, the application server 102 may be further configured to receive the design data from the database server 104 or from the user-computing device (not shown). The design data may include at least the specifications of the one or more return air fans, supply air fans, VFDs, VAV dampers, fresh air dampers, bleed air VCDs, filters (such as normal filters and HEPA filters), chilled water coil, hot water coil, and ducts. These specifications may guide the installation, operation, and maintenance of the system. In an embodiment, the return air fans (402a in Figure 4) may pull air from the facility back to the AHU 114a for reconditioning. The specifications may include fan size, type (e.g., centrifugal, axial), capacity (in CFM - cubic feet per minute), motor power (in kW), and efficiency ratings. In an embodiment, the supply air fans (402a in Figure 4) may redistribute conditioned air back into the facility. The specifications are like the return air fans, with additional details on compatibility with filtration systems and pressure requirements. In an embodiment, the VFDs (402b in Figure 4) may control the speed of one or more motors based on demand. The specifications may include power range (e.g., 0-100 kW), voltage rating, efficiency, compatibility with different types of motors, and control features like remote monitoring. In an embodiment, the VAV dampers (402c in Figure 4) may regulate air volume to different areas. The specifications may include size, material, airflow range (in CFM), control type (e.g., manual, motorized), and response time. In an embodiment, the fresh air dampers (402d in Figure 4) may control the amount of fresh air entering the system. The specifications may include size, material, leakage rate, actuator type, and control signal requirements. In an embodiment, the bleed air VCDs (402e in Figure 4) may regulate bleed air, which is a portion of the recirculated air that is exhausted. The specifications may focus on control range, compatibility with duct systems, and response characteristics. In an embodiment, the filters (402f in Figure 4) may include one or more normal filters and HEPA filters. The normal filters may be specified by size, filtration grade (e.g., MERV rating), and material. The HEPA filters may be specified by their efficiency (e.g., 99.97% efficiency at capturing particles as small as 0.3 microns), size, and pressure drop characteristics. In an embodiment, the chilled water coil (402g in Figure 4) may be used for cooling the air. The specifications may include material, coil size, fin spacing, water flow rate, and capacity (in tons of refrigeration). In an embodiment, the hot water coil (402g in Figure 4) may be used for heating the air. The specifications may be similar to the chilled water coils but may also include maximum operating temperature and pressure. In an embodiment, the ducts (402h in Figure 4) may transport conditioned air throughout the facility. The specifications may include material (e.g., galvanized steel, fiberglass), size (cross-sectional dimensions), thickness, insulation properties, and fire resistance. For example, a supply air fan might be specified as a centrifugal type with a capacity of 15,000 CFM, motor power of 30 kW, suitable for HEPA filtration, and designed for a static pressure of 2.5 inches water gauge. A HEPA filter could be specified as having dimensions of 24"x24"x12", with an efficiency of 99.97% at 0.3 microns, and a pressure drop of 0.22 inches at 500 CFM. The design data ensures that each component is appropriate for its intended function within the HVAC system 114, meeting the stringent requirements of pharmaceutical environments in terms of air quality, efficiency, and regulatory compliance.

At step 508, the first principles physics-based modelling is performed. In an embodiment, the application server 102 or the computing device 106 may be further configured to perform the first principles physics-based modelling by using a first principles physics-based modelling software to obtain the first principles physics-based model 112a (Figure 1c). The first principles physics-based model 112a may be formulated and simulated based on at least one of the operational data and the design data.

At step 510, the first principles physics-based model 112a is validated. In an embodiment, the application server 102 or the computing device 106 may be further configured to perform a check to validate the first principles physics-based model 112a. The first principles physics-based model 112a may be validated based on one or more of: (1) by using real-time operational data or (2) by performing manual inspection. If at step 510, the validation is successful, then step 512 is executed, else the control goes to step 508 where the first principles physics-based model 112a is again simulated based on at least one of the operational data and the design data. Here another set of real-time operational data may be used if available.

At step 512, the DoE data is generated. In an embodiment, the application server 102 or the computing device 106 may be further configured to generate the DoE data. In some embodiments, a DoE generator (not shown) running on the application server 102 or the computing device 106 may be configured to generate the DoE data. The DoE data may be generated based on maximum and minimum values of each input variable and by using an interval for predicting one or more intermediate values between the maximum and minimum values of each input variable. For example, if a minimum value for an input variable is 1000 and a maximum value for the input variable is 4000, and interval is 1000, then the DoE of this input variable will be 1000, 2000, 3000, and 4000. In a scenario where the number of input variables is more than 1, for example, 3 input variables, and each input variable needs to have 5 values based on its minimum value, maximum value, and defined interval, then the DoE may have rows equal to 5³ = 125 (i.e., (number of required values based on a defined interval)^{(number of input variables)}). Further, in an embodiment, the application server 102 or the computing device 106 may be configured to generate outputs of the DoE data. For example, for each row of input variables, one or more outputs may be generated corresponding to the one or more output variables or operational parameters.

At step 514, the ROM 112b (Figure 1c) is generated. In an embodiment, the application server 102 or the computing device 106 may be further configured to generate the ROM 112b. In some embodiments, a ROM generator (not shown) running on the application server 102 or the computing device 106 may be configured to generate the ROM 112b. The ROM 112b may be generated based on the DoE data and outputs of the DoE data. In an embodiment, the ROM 112b is a data frame that includes the DoE data and outputs of the DoE data. In DoE, each input variable is associated with a range of values, often including the minimum and maximum possible values. Further, for each combination of input values in the DoE, the corresponding outputs are recorded. The result of this process is a dataset where each row represents a unique combination of input values and their corresponding outputs. This dataset is invaluable for understanding how changes in the inputs may affect the outputs, revealing complex relationships and dependencies within the process. In an embodiment, the ROM 112b integrates all this DoE data and outputs of the DoE data, thereby creating a model that encapsulates the system's behavior across a wide range of conditions. In some embodiments, the ROM 112b may also include one or more sets of optimized values or operational values.

At step 516, a data frame is generated. In an embodiment, the application server 102 or the computing device 106 may be further configured to generate the data frame based on the ROM 112b and the data from the first preprocessing stage (from step 504).

At step 518, the second preprocessing is performed. In an embodiment, the preprocessing module 102c may be further configured to perform the second preprocessing of the data frame (from step 516). It may involve cleaning, normalizing, and structuring the data frame, ensuring its quality and consistency. This might also involve filtering out irrelevant data points, correcting errors, or transforming data formats.

At step 520, a master data frame is generated. In an embodiment, the application server 102 or the computing device 106 may be further configured to generate the master data frame based on the second preprocessing of the data frame.

At step 522, the one or more environment models 112c are generated. In an embodiment, the application server 102 or the computing device 106 may be further configured to generate the environment models 112c based on at least the master data frame including at least the DoE data and the outputs of the DoE data. The environment models 112c may be generated by using one or more machine learning algorithms, and each machine learning algorithm may include at least one or more neural networks.

At step 524, the environment models 112c are validated. In an embodiment, the application server 102 or the computing device 106 may be further configured to perform a check to validate the environment models 112c. Each environment model 112c may be validated based on at least the real test values and predicted values. If at step 524, the validation is successful, then step 526 is executed, else the control goes to step 522 again where preprocessing of the required or used or new data may be performed and then hyperparameter tuning may be further employed for retraining each environment model 112c.

At step 526, the RL agent 202 is trained. In an embodiment, the RL agent 202 may be configured to receive training using at least the environment models 112c. The RL agent 202 may learn the one or more control strategies through interaction with at least the one or more environment models 112c for generating the one or more policies. Each policy includes at least the optimal speed of at least one fan, based on processing of the real-time predictions by at least the one or more environment models 112c.

At step 528, the RL agent 202 is validated. In an embodiment, the application server 102 may be further configured to perform a check to validate the RL agent 202. In some embodiment, the RL agent 202 may be validated over the digital twin 112. In some embodiment, the RL agent 202 may be validated over the environment models 112c. In some embodiment, the RL agent 202 may be validated by the post-processing module 304. The validation may include simulating the predicted outcomes (such as the fans speeds) and checking whether it reduces the energy consumption. If at step 528, the validation is successful, then step 530 is executed, else the control goes to step 526 again where retraining is executed. In some embodiments, preprocessing of the required or used or new data may be performed and then hyperparameter tuning may be employed for retraining the RL agent 202.

At step 530, the disclosed system is deployed. Further, based on the real-time predictions by the environment models 112c, the RL agent 202 may output at least one policy including at least the optimal speed of at least one fan. Further, the at least one fan may be operated based on the corresponding optimal speed that may lead to optimization of energy consumption. The energy consumption may be optimized while maintaining at least the required temperature, relative humidity, ACPH, and pressure difference in the pharma room of the pharma plant. Further, in an embodiment, the RL agent's (202) policies may be continuously updated based on interactions with at least one of the digital twins 112, the environment models 112c, or the real-time operational data. Further, the RL agent 202 may adapt to changing objectives, system requirements, and new data post-deployment, and adjust its policies based on a continuous feedback loop from the real-time operational data.

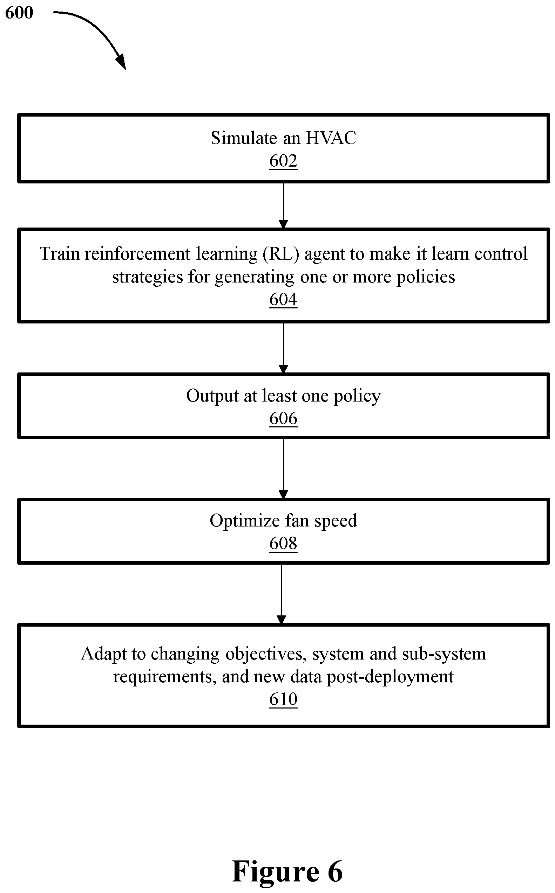

Figure 6 is a diagram that illustrates a flowchart 600 of a method for optimizing the energy consumption by the AHUs 114a of the HVAC system 114, in accordance with an embodiment of the present invention.

At step 602, the HVAC system 114 including at least the AHUs 114a is simulated. In an embodiment, the HVAC system 114 or at least the AHUs 114a may be simulated to create the digital twin 112 based on the collected operational data and the design data.

At step 604, the RL agent 202 may be trained. In an embodiment, the RL agent 202 may receive training by using at least the environment models 112c derived from the digital twin 112 of the HVAC system 114 or the AHUs 114a. The RL agent 202 may receive training to make it learn the one or more control strategies through interaction with at least the environment models 112c for generating the one or more policies. Each policy may include at least predicted speed of the one or more fans associated with the AHUs 114a. In an embodiment, the RL agent's (202) training may also involve defining the reward function based on at least one of the fan power consumption, fan speed, chilled water inlet temperature, chilled water valve opening, hot water inlet temperature, hot water valve opening, room temperature, relative humidity, ACPH, and pressure difference. The RL agent 202 may learn by maximizing the received positive rewards for more desired outcomes and by minimizing the received negative rewards for less desired outcomes.

At step 606, the at least one policy is output. In an embodiment, the policy including at least the optimal speed of the one or more fans is output, based on processing of at least the real-time predictions by the one or more environment models 112c. The one or more fans may be operated based on the corresponding optimal speed that may lead to optimization of the energy consumption.

At step 608, the fan speed is optimized. In an embodiment, the RL agent 202 may generate the policy, which when implemented, optimize the fan speed, ensuring the one or more constraints are met by setting the one or more optimal values for one or more process parameters, thereby enabling savings in at least the energy consumption. The one or more constraints may include at least maintaining the required temperature in the pharma room, maintaining the required relative humidity in the pharma room, maintaining the required ACPH in the pharma room, and maintaining the required pressure difference in the pharma room. Thus, it is essential for the RL agent 202 to predict the fan speed in real-time such that the constraints are met.

At step 610, the RL agent 202 adapts to changing objectives, system and sub-system requirements, and new data post-deployment, and adjusts its policies or generates new policies based on a continuous feedback loop from the real-time operational data. Also, each policy may be validated over the digital twin 112 or the environment models 112c. The validation may include simulating the predicted outcomes over the digital twins 112 or the environment models 112c and checking whether it optimizes the energy consumption.

In the pharmaceutical industry, utilizing the sophisticated HVAC system 114 equipped with the RL agent 202 and digital twin 112 offers several key advantages. Firstly, it enhances energy efficiency. By continuously monitoring and adjusting parameters like fan speed, temperature, and humidity, the system operates only as intensively as necessary, reducing energy consumption and costs. This precision in environmental control is crucial for maintaining the quality and safety of pharmaceutical products. Precise temperature and humidity levels are essential for the stability of many pharmaceuticals, and the ability to maintain these conditions accurately ensures compliance with stringent regulatory standards and prevents product spoilage or efficacy loss. Moreover, the system's ability to predict and adapt to changing conditions - such as variations in external temperature or humidity, or different production requirements - allows for proactive adjustments. This adaptability is particularly beneficial in an industry where production processes and environmental standards can vary significantly. For instance, different stages of drug production may require different environmental conditions, and the system's flexibility ensures these can be met without manual intervention. Also, use of the digital twin 112 for simulation and modeling further enhances system reliability and maintenance. It allows for the testing of different scenarios and the anticipation of potential issues without any risk to actual operations. This predictive maintenance approach not only minimizes downtime but also extends the lifespan of HVAC equipment. Also, the advanced HVAC system 114 contributes to overall operational excellence in pharmaceutical manufacturing. It ensures a safe and comfortable working environment for staff, which is critical in facilities handling hazardous materials or working with potent pharmaceutical compounds. By providing a consistently controlled environment, the system supports the pharmaceutical sector's goal of producing high-quality, safe, and effective medical products.

While the present systems and methods have been described with reference to exemplary embodiments, it should also be appreciated that numerous modifications and alternative embodiments may be devised by those having ordinary skill in the art without departing from the broader and intended spirit and scope of the present system as set forth in the claims that follow.

## Claims

1. A system (100) for optimizing energy consumption by a pharma Heating, Ventilation, and Air Conditioning (HVAC) (114), the system (100) comprising:
a digital twin (112) configured to simulate the HVAC (114) including at least one or more air handling units (AHUs) (114a) associated with a pharma plant (108), based on collected operational data and design data; and
a reinforcement learning (RL) agent (202) configured to:
receive training using one or more environment models (112c) derived from the digital twin (112) of the HVAC (114);
learn one or more control strategies through interaction with at least the one or more environment models (112c) for generating one or more policies, wherein each policy includes at least speed of one or more fans (402a) associated with the one or more AHUs (114a); and
output at least one policy including at least optimal speed of the one or more fans (402a), based on processing of at least real-time predictions by at least the one or more environment models (112c), wherein the one or more fans (402a) are operated based on the corresponding optimal speed that leads to optimization of energy consumption, while maintaining at least required temperature, relative humidity, air changes per hour (ACPH), and pressure difference in a pharma room of the pharma plant (108).

2. The system (100) according to claim 1, wherein the required temperature is maintained in the pharma room by the HVAC (114) by continuously monitoring the pharma room and controlling fan speed, chilled water inlet temperature, chilled water valve opening, hot water valve opening, hot water inlet temperature, when the temperature is out of a predefined range.

3. The system (100) according to claim 1, wherein the required relative humidity is maintained in the pharma room by the HVAC (114) by controlling chilled water valve opening, hot water valve opening, chilled water inlet temperature, hot water inlet temperature, when the relative humidity is out of a predefined range.

4. The system (100) according to claim 1, wherein the required ACPH is maintained in the pharma room by the HVAC (114) by regulating quantity of fresh inlet air into the AHUs (114a) by controlling the fresh air damper opening.

5. The system (100) according to claim 1, wherein the required pressure difference is maintained in the pharma room by the HVAC (114) to prevent issues including at least dust entry, cross contamination, and leakage of expensive drug ingredients, by keeping negative pressure inside the pharma room as compared to an outside surrounding area.

6. The system (100) according to claim 1, wherein the required pressure difference is maintained in the pharma room by the HVAC (114) to prevent issues including at least dust entry, cross contamination, and leakage of expensive drug ingredients, by keeping positive pressure inside the pharma room as compared to an outside surrounding area.

7. The system (100) according to claim 1, wherein the simulation of the HVAC (114) includes simulation of the AHUs (114a) including simulation of at least one or more fans (402a), variable frequency drives (VFDs) (402b), variable air volume (VAV) dampers (402c), fresh air dampers (402d), bleed air variable control drives (VCDs) (402e), filters (402f), coils (402g), and ducts (402h).

8. The system (100) according to claim 7, wherein the operational data includes at least real-time data related to at least off coil temperatures, return air temperature, supply air temperature, chilled water inlet temperature, chilled water return temperature, supply differential pressure transmitter, fan speed, fan power consumption, hot water inlet temperature, hot water return temperature, chilled water valve opening percentage, hot water valve opening percentage, air flow rate, and return air relative humidity, and wherein the design data includes at least specifications of at least the one or more fans (402a), variable frequency drives (VFDs) (402b), VAV dampers (402c), fresh air dampers (402d), bleed air VCDs (402e), filters (402f), coils (402g), and ducts (402h).

9. The system (100) according to claim 1, wherein the RL agent (202) is further configured to optimize the energy consumption, ensuring one or more constraints related to the required temperature, relative humidity, ACPH, and pressure difference are met by setting the one or more fans (402a) to their optimal speeds, and setting optimal values for chilled water inlet temperature, chilled water valve opening, hot water inlet temperature, hot water valve opening, thereby enabling savings in at least the energy consumption.

10. The system (100) according to claim 1, further comprising: (1) a first principles physics-based model (112a) that is simulated based on the processed operational data and the design data and is then validated by: using real-time operational data or performing manual inspection, (2) a reduced order model (ROM) (112b) including at least design of experiments (DoE) data and outputs of the DoE data, wherein the ROM (112b) is generated based on the first principles physics-based model and simulation, and (3) the one or more environment models (112c) that are generated based on at least the DoE data and the outputs of the DoE data, and wherein the one or more environment models (112c) are validated based on real test values and predicted values, and wherein preprocessing is further performed and then hyperparameter tuning is employed for retraining the one or more environment models (112c) in cases where the validation does not meet predefined error thresholds.

11. The system (100) according to claim 10, wherein the digital twin (112) comprises at least one of: (1) the first principles physics-based model (112a), (2) the ROM (112b), and (3) the one or more environment models (112c).

12. The system (100) according to claim 1, wherein the RL agent's (202) training further involves defining a reward function based on at least one of fan power consumption, fan speed, chilled water inlet temperature, chilled water valve opening, hot water inlet temperature, hot water valve opening, room temperature, relative humidity, ACPH, and pressure difference, and wherein the RL agent (202) learns by maximizing the received positive rewards for more desired outcomes and by minimizing the received negative rewards for less desired outcomes.

13. The system (100) according to claim 1, wherein the RL agent's (202) policies are continuously updated based on interactions with at least the digital twin (112), the one or more environment models (112c), and real-time operational data associated with the HVAC (114) operating at the pharma plant (108), and wherein the RL agent (202) is further configured to adapt to changing objectives, system and sub-system requirements, and new data post-deployment, and adjust its policies or generates new polices based on a continuous feedback loop from the real-time operational data of the HVAC (114) operating at the pharma plant (108).

14. The system (100) according to claim 13, wherein each policy is validated over the digital twin (112) or the one or more environment models (112c), and wherein the validation includes simulating the predicted outcomes over the digital twin (112) or the one or more environment models (112c) and checking whether it optimizes the energy consumption.

15. The system (100) according to claim 1, wherein the real time predictions include at least off coil temperature, return air temperature, supply air temperature, chilled water inlet temperature, chilled water return temperature, supply differential pressure transmitter, fan speed, fan power consumption, hot water inlet temperature, hot water return temperature, chilled water valve opening percentage, hot water valve opening percentage, air flow rate, and return air relative humidity.
